(19)

**Europäisches Patentamt**
**European Patent Office**
**Office européen des brevets**

(11)  **EP 4 186 936 A1**

(12) # EUROPEAN PATENT APPLICATION

(43) Date of publication:
**31.05.2023 Bulletin 2023/22**

(21) Application number: **21461625.2**

(22) Date of filing: **26.11.2021**

(51) International Patent Classification (IPC):
**C08G 18/40** (2006.01)  **C08G 18/42** (2006.01)
**C08G 18/48** (2006.01)  **C08G 18/76** (2006.01)
**C08G 63/48** (2006.01)

(52) Cooperative Patent Classification (CPC):
**C08G 18/4825; C08G 18/4018; C08G 18/4202;
C08G 18/4241; C08G 18/4288; C08G 18/4812;
C08G 18/4841; C08G 18/7664; C08G 63/48;**
C08G 2110/0025

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Selena Industrial Technologies Sp. z o.o.**
**58-200 Dzierzoniów (PL)**

(72) Inventors:
- **Ziólkowski, Bartosz**
  **53-028 Wroclaw (PL)**
- **Bandakova, Joanna**
  **43-100 Tychy (PL)**
- **Wieczorek, Kinga**
  **58-100 Swidnica (PL)**

(74) Representative: **Witek, Rafal**
**WTS Patent Attorneys**
**Witek, Sniezko & Partners**
**ul. Weigla 12**
**53-114 Wroclaw (PL)**

(54) **BIO-BASED POLYESTER POLYOLS, ONE-COMPONENT BIO-BASED POLYESTER POLYOL POLYURETHANE FOAM OR FOAM ADHESIVE COMPOSITION AND USE OF BIO-BASED POLYESTER POLYOL FOR MANUFACTURING ONE COMPONENT CONSTRUCTION FOAM OR FOAM ADHESIVE**

(57)    The first object of the invention is a polyester polyol used in one component foam or foam adhesive, wherein the polyester polyol has a hydroxyl value in the range of 80-240 mg KOH/g, functionality from 2 to 3 and viscosity below 5000 mPa*s at 25°C and biocarbon content measured according to ASTM D6866-18 is no less than 89%, wherein the polyester polyol is obtainable by reacting at least two polyhydroxyl alcohols, wherein at least one is a bio-based polyhydroxyl alcohol, each comprising at least two hydroxyl groups, at least one dicarboxylic acid, preferably a bio-based or a sustainably pro- duced dicarboxylic acid, at least one modifier, in the pres- ence of a catalyst. Another object of the invention is a bio-based one component polyurethane foam or adhesive foam composition comprising a polyester polyol component, an isocyanate component, plasticiser, surfactant, flame retardant, catalyst, propellant gas and at least one polyether polyol, wherein the biocarbon content measured according to ASTM D6866-18 is at least 20% by weight. The invention also discloses a use of the bio-based polyester polyol for manufacturing one com- ponent construction foam or foam adhesive.

EP 4 186 936 A1

**Description**

The state of the art regarding PU OCF (PolyUrethane One Component Foam) and foam adhesive formulation comprises a polyol mixture, isocyanate, surfactant, propellant gas and a catalyst. Optionally flame retardants, plasticisers and stabilisers can be added depending on the requirements of the final foam application. During production of OCF product, the first step consists of preparing a polyol premix. This premix contains usually a certain ratio of diol and triol polyols mixed with catalysts, surfactants, plasticisers and flame retardants. After the premix is dosed into the can, the appropriate amount of isocyanate is added, typically a polymeric version of 4.4'-methylenebis(phenyl isocyanate) (PMDI). The can is then pressurized with propellant gas. Usually dimethyl ether or liquefied petroleum gas (LPG) is used. After pressurizing the can, the content is mixed and the reaction of polyol with isocyanate in the can is completed within hours of production. The contents of an OCF foam product is therefore mainly an isocyanate prepolymer solubilized in liquid pressurized gas. When the can content is sprayed, this prepolymer comes into contact with atmospheric moisture and water-driven curing of the sprayed foam occurs within minutes to several hours depending on the catalyst levels. The foam properties such as foam yield, curing speed, froth stability, foam mechanical strength, adhesion and flammability depend on the selection and proportions of the foam formulation ingredients. However, the main constituent of the foam structure is the polyurethane produced in the can from polyol and isocyanate components. Therefore, these are the main building blocks that contribute to the carbon footprint of OCF products and these should be substituted by bio-based replacements.

However, since the described OCF foams are mainly used in construction chemistry applications, certain material performance characteristics are compulsory. These include high foam yield, good foam structure, mechanical and dimensional stability, good adhesion to substrates and non-friability at low temperatures, good heat insulation and sound dampening properties.

Currently in OCF foam formulations several types of polyether polyols are used. The reason for using polyethers is that the OCF foam application requires the polyols to be of low viscosity so that the can mixture can be easily sprayed by the propellant gas forming a pre-foamed froth. Since polyether (polypropylene) glycols are low viscous liquids, they are the preferred polyol component. The polyether polyols also exhibit low glass transition temperature ($T_g$) that provides the final foam with dimensional flexibility under low temperatures (low friability). Polyether polyols are offered in several grades of which the most useful for OCF foam recipes are: long linear diols with hydroxyl value (OHV) 56-110 mg KOH/g giving foam flexibility, and shorter, branched triols with OHV 155 - 260 mg KOH/g) providing mechanical stability and stiffness. The foam formulator needs to balance at least these two types of polyether polyols to obtain the appropriate final foam flexibility and mechanical performance. Bio-based polyethers are not readily available and therefore the solution was to develop bio-based polyester polyols suitable for bio-based OCF products.

European patent EP1883690B1 provides methods to convert vegetable oils and/or animal fats (e.g. soybean oil) to highly functionalized alcohols in essentially quantitative yields by an ozonolysis process. The functionalized alcohols are useful for further reaction to produce polyesters and polyurethanes. The invention provides a process that can utilize renewable resources such as oils and fats derived from plants and animals.

American patent US2005239915A1 describes series of polyurethane foams comprising of bio-based polyols, hydroxyl groups, and water, along with amine catalysts and monomers and surfactants. Said polyols are based on vegetable oils such as castor or soy oils.

Another, Chinese patent CN107522832B describes method of obtaining bio-based polyol by mixing raw glycerin, waste fat, fatty acid and polyol with the addition of catalyst, wherein the mass ratio of crude glycerin to waste fat is 1:5 to 5:1. The acidic catalyst is selected from sulfuric acid or p-toluenesulfonic acid and the waste fat may be selected from: waste fat from animals and plants, produced by catering and food processing units, edible oil, and waste fat from oil processing. The fat must undergo the following treatments before use: heating and filtering to remove impurities, and then vacuum distillation to remove water. Further such bio-based polyol is used for preparing rigid PU (PolyUrethane) foam.

WO2018005538A2 shows an invention relating to hybrid polyols useful in the manufacture of polyurethane. The hybrid polyols are derived by copolymerizing or grafting a traditional polyester polyol onto a natural oil polyol. The traditional polyester polyol grafted onto natural oil polyol contains a high level of bio-renewable content. The hybrid polyols of the present invention with high level of bio-renewable content is useful in the manufacture of polyurethane either alone or in combination with polyester polyol or polyether polyol derived from petrochemical sources.

European patent application EP3052559A1 discloses a blend of polyols comprising e.g. polyester polyol obtained in polycondensation reaction where polycondensation is performed in a two-step process by reacting components, such as at least aromatic dicarboxylic acid, aromatic dicarboxylic anhydride or aromatic dicarboxylic acid diester and epoxy compounds, such that only a portion of the carboxylic acid, anhydride or ester groups are consumed to form a compound having an ester-containing intermediate containing an ester group and a new hydroxyl group, and then reacting the ester-containing intermediate with a polyol having at least two hydroxyl groups per molecule, or a mixture of two or more such polyols.

Another European patent application EP2226311A1 describes polyol based on dicarboxylic acid having four carbon atoms, where one of carbon atoms is attached via a carbon-carbon single bond to a saturated carbon atom in a fatty acid hydrocarbyl group, said dicarboxylic acid is esterified with residues of aliphatic or cycloaliphatic diols, wherein from 0 to 15 wt % of esterified residues of at least one $C_4$-$C_{12}$ anhydride, $C_4$-$C_{12}$ diacid or $C_4$-$C_{12}$ lactone.

American patent application US2013090449A1 provides methods for producing bio-based hydroxyl-terminated polyester polymers, wherewherein molten-dispersed or hydrocarbonaceous fluid-dispersed phase polyhydroxyalkanoate polymers are reacted with a difunctional hydroxylated insertion compound at a sufficient temperature and time to depolymerize the starting polyester polymers to provide hydroxyl-terminated reaction products of reduced molecular weight. The difunctional hydroxylated insertion compound can be at least one of diol, aminoalcohol, and polyhydroxy alcohol. The use of catalyst may be required, reduced or eliminated. The hydroxyl-terminated reaction product is at least one of hydroxyl-terminated polyhydroxyalkanoate. A method for making polyurethanes is further described, wherein the hydroxyl-terminated reaction product is reacted with polyfunctional isocyanate to form a polyurethane product.

In the publication "Fully Bio-Based Thermosetting Polyurethanes from Bio-Based Polyols and Isocyanates" (Polymers 2021, 13, 1255) 3 polyisocyanates and polyols with high renewable carbon contents were studied, namely L-lysine ethyl ester diisocyanate (LDI), pentamethylene-diisocyanate (PDI) isocyanurate trimer, and hexamethylene-diisocyanate (HDI) allophanate as the isocyanates, as well as castor oil and polypropanediol as the polyols, which are are commercially available at a large scale and were used in direct formulations or used as prepolymers.

European patent application EP3475358A2 discloses hybrid polyol based on natural oil polyol useful in flexible polyurethane foam manufacturing produced by reacting at least one natural oil polyol with at least one polyfunctional carboxylic acid and at least one polyhydric alcohol. The oil is selected from a group consisting of castor oil, coconut oil, cochin oil, corn oil, cottonseed oil, linseed oil, olive oil, palm oil, palm kernel oil, peanut oil, soybean oil, sunflower oil, tall oils, tallow, lesquerella oil, tung oil, whale oil, tea seed oil, sesame seed oil, safflower oil, rapeseed oil, fish oils, any derivatives thereof, and any combinations thereof and the polyol is selected from dihydroxyl alcohols. The preparation process is realised in the presence of at least one polyfunctional carboxylic acid with at least two carboxylic acid groups and esterification catalyst.

European patent EP2912081B1 describes a process for the production of polyester polyol-based soft polyurethane foams by a reaction of the first component containing 100 parts by weight of at least one polyester polyol having a hydroxyl number of 40 mg KOH/g to 85 mg KOH/g, an acid number of less than 5 mg KOH/g and an ester group concentration of less than 9.80 mol/kg, with the second component B containing di- and/or polyisocyanates. The polyester polyol is obtainable by a reaction of a reagent having at least two dicarboxylic acids and the second reagent being at least one di- and/or polyhydric aliphatic alcohol. Furthermore, polyester polyol-based soft polyurethane foam contains 0.5 to 25 parts by weight (based on the parts by weight of the polyester polyol) of waterand/or physical blowing agents, 0.05 to 10 parts by weight (based on the parts by weight of the polyester polyol) of auxiliary and additive substances such as: catalysts, surface-active additives, pigments or flame retardants, 0 to 10 parts by weight (based on the parts by weight of the polyester polyol) of compounds comprising isocyanate-reactive hydrogen atoms having a molecular weight of 62-399.

The publication "Synthesis and Characterization of Bio-Based Polyester Polyol" (Yazici and Çelebi, JOTCSA. 2016; 3(3): 721-730) describes a method of obtaining a bio-based polyester polyol, where in a three-necked reactor with a mixture of the previously measured weight of dicarboxylic acid and glycol are set at 100°C under constant stirring and nitrogen atmosphere. The temperature is increased alternately from 140 to 220°C. The water reflux of water is introduced at 170-180°C. When no further reflux of water is observed, a few grams of resin (1-2 g) are added in order to measure the acid number by titration with 0.1 mol/L alcoholic solution of KOH. If the acid number ($V_H$) is lower than 3.0 mg KOH/g, the nitrogen flow is increased. The acid number is measured again and the synthesis is finished when $V_H$ is lower than 1.0 mg KOH/g and hydroxyl value ($V_{OH}$) is required.

Polyester polyols offer higher mechanical strength, higher adhesion and better fire performance than polyethers. However, the commercial grades of polyester polyols are either too viscous, produce brittle foam due to high $T_g$, or do not have the necessary branching. Currently there are no bio-based polyester polyols on the market that could fully substitute the polyether polyol part in a OCF foam formulation. The polyesters in the foam market that have viscosities and chain lengths closest to what is needed for OCF foam are polyesters intended for a rigid PIR/PUR foam. Unfortunately, their reactivity and molecule rigidity does not allow using more than ca. 15% of them in a polyol mixture without compromising the OCF foam properties.

The aim of the invention is to provide bio-based polyester polyols for manufacturing polyurethane foams formulations, especially in one-component foams or foam adhesives, having high share of bio-based carbon of no less than 89% by weight and viscosity no greater than 5000 mPa*s@25°C. Another aim of the invention is to provide a polyurethane one component foam (OCF) or foam adhesive product formulation with a high share of bio-based and/or renewable carbon of at least 20%. OCF-suitable polyol raw material is referenced to desired molecular structure and viscosity.

The first object of the invention is a polyester polyol used in one component foam or foam adhesive, wherein the polyester polyol has a hydroxyl value in the range of 80-240 mg KOH/g, functionality from 2 to 3 and viscosity below 5000 mPa*s at 25°C and biocarbon content measured according to ASTM D6866-18 is no less than 89%, wherein polyester polyol is obtainable by reacting

A) at least two polyhydroxyl alcohols, wherein at least one is a bio-based polyhydroxyl alcohol, each comprising at least two hydroxyl groups,
B) at least one dicarboxylic acid, preferably a bio-based or sustainably produced dicarboxylic acid,
C) at least one modifier,

in the presence of a catalyst,
wherein the obtained bio-based polyester polyol has hydroxyl value from 80 mg KOH/g to 240 mg KOH/g, functionality from 2.00 to 3.00, preferably it has functionality from 2.08 to 3, and viscosity no greater than 5000 mPa*S at 25°C, and biocarbon content measured according to ASTM D6866-18 is no less than 89%, wherein preferably the hydroxyl value is from 100 mg KOH/g to 240 mg KOH/g, more preferably from 110 mg KOH/g to 220 mg KOH/g.

Preferably, the polyester polyol is obtained in a two-step process, wherein in the first step component A is reacted with component B, preferably components A and B are reacted in the presence of the catalyst until acidic value is below 1 mg KOH/g, and in the second step to reaction mixture is added at least one modifier, preferably the modifier is added to the reaction mixture when acidic value is below 1 mg KOH/g.

In order to synthesise a bio-based polyester polyol for OCF applications bio-based raw materials of certain classes need to be used such as: bio-dicarboxylic acids, bio-dicarboxylic acid anhydrides, bio-polyalcohols with the number of hydroxyl groups per molecule being between 2 and 6, modifiers and fillers of plant origin or recycled materials, such as recycled PET, PBT plastics or recycled polyurethane (foams and elastomers).

The polyhydroxyl alcohols are selected from the group comprising of, but not limited to: ethylene glycol, diethylene glycol, triethylene glycol, polyethylene glycol of average molecular weight of 200-1000 g/mol, propylene glycol, dipropylene glycol, tripropylene glycol, polyethylene glycol of average molecular weight 200-1000 g/mol, any diol, constitutional isomer of: 1,3-propanediol, 1,4-butanediol, 1,5-pentanediol, 1,6-hexanediol, glycerol, trimethylol propane, pentaerythritol, isosorbide, wherein preferably the polyhydroxyl alcohols are sustainably produced or are bio-based polyhydroxyl alcohols.

The polycarboxyl carboxylic acids are selected from the group consisting of but not limited to: succinic acid, glutaric acid, adipic acid, pimelic acid, suberic acid, azelaic acid, sebacic acid, dodecanedioic acid, citric acid, phthalic acid, trimesic acid and dimer fatty acids with number of carbons form 24-42, preferably dicarboxylic acid is selected from group comprising: azelaic acid, succinic acid and/or dimer fatty acid, wherein preferably dicarboxylic acid is bio-based or sustainably produced dicarboxylic acid, or corresponding anhydrides thereof. Dimer fatty acids or dimerised fatty acids are dicarboxylic acids prepared by dimerizing unsaturated fatty acids.

The multicarboxyl carboxylic acid anhydrides are selected from the group comprising of but not limited to: phthalic anhydride, pyromellitic anhydride, maleic anhydride, succinic acid anhydride, glutaric acid anhydride, adipic acid anhydride, pimelic acid anhydride, suberic acid anhydride, azelaic acid anhydride, sebacic acid anhydride, dodecanedioic acid anhydride. Biomass origin versions of the above molecules are also included if available.

The modifiers are selected from a group consisting of polyethylene terephthalate (PET), polybutylene terephthalate (PBT) castor oil, soybean oil, cardoon oil, safflower oil, linseed oil, coconut oil, cochin oil, corn oil, cottonseed oil, olive oil, palm oil, functionalized palm kernel oil, peanut oil, sunflower oil, tall oils, tallow, lesquerella oil, tung oil, whale oil, tea seed oil, sesame seed oil, rapeseed oil, fish oils, any epoxidized derivatives of such oils and any combinations thereof. Any oil of plant origin can be used as the modifier, but preferably soybean oil and castor oil are preferred together with their epoxy-derivatives. Recycled PET or PBT can also be added as a filler/modifier during synthesis

In a preferable embodiment, the catalyst is selected from a group comprising: tetrabutyl titanate, tetraisopropyl titanate, titanium lactate, zinc chloride, tin (II) chloride, preferably the catalyst is tetrabutyl titanate.

Another object of the invention is a bio-based one component polyurethane foam or adhesive foam composition comprising a polyol component, an isocyanate component, plasticiser, surfactant, flame retardant, catalyst, propellant gas, characterised in that:

the polyol comprises mixture of polyester polyol and at least one polyether polyol,
wherein the polyester polyol is a mixture of at least two polyester polyols wherein
each polyester polyol is obtained as defined according to the first object of the invention,
wherein weight ratio of the isocyanate component to the polyol component is from 1:1 to 1:3 by weight, preferably 1:1.7 to 1:1.9,
and total biocarbon content measured according to ASTM D6866-18 is at least 20% by weight,
wherein preferably biocarbon content measured according to ASTM D6866-18 is from 20% to 35%, preferably from 20% to 30%, but most preferably from 20.20% to 26.81% by weight,

Preferably the plasticiser is selected from a group comprising: chloroparaffin or tris-chloropropyl phosphate and the surfactant is a silicone based surfactant. The flame retardant is selected from a group comprising: tris-chloropropyl phosphate or triethyl phosphate.

Preferably the catalyst is selected from a group comprising: 2,2'-dimorpholinodiethylether or pentamethyldiethyltriamine, more preferably the catalyst is 2,2'-dimorpholinodiethylether. In another preferable embodiment the propellant gas is selected from a group comprising: LPG or dimethyl ether, preferably the propellant gas is a bio-based propellant gas.

Preferably the polyether polyol is selected from a group comprising: polypropylene glycol triol with an average molecular weight of 400 - 1000 g/mol or polypropylene glycol diol with an average molecular weight of 400 - 1000 g/mol or their mixture.

In the following preferable embodiment the polyester polyol mixture comprises two polyester polyols in ratio from 15.2:3.5 to 16.7:5.1 by weight, or three polyester polyols in ratio 4.2:12.9:3.7 by weight, or four polyester polyols in ratio from 0.6:4.1:12.3:5.3 to 1.8:3.7:4.4:11.2 by weight.

The isocyanate component is selected from a group comprising polymeric methylene diphenyl diisocyanate or trimerized pentamethylene diisocyanate, preferably the isocyanate component is polymeric methylene diphenyl diisocyanate.

In the preferable embodiment the polyester component to isocyanate component ratio is from 0.53 to 0.58 by weight. In another preferable embodiment the isocyanate component to polyester component ratio is from 1.5:1 to 3:1, by weight, preferably from 1.8:1 to 2.8:1, most preferably from 2.01: to 2.38:1.

Yet another object of the invention is a use of bio-based polyester polyol for producing one component construction foam or foam adhesive.

The new feature is the high biocarbon content with simultaneous molecular/property suitability of these polyester polyols for OCF foam and foam adhesive applications. The Inventors have not managed to produce a satisfactory OCF product with currently available bio-based polyester polyols mainly due to lack of the required molecule length (i.e. average molecular mass), molecule branching, too high viscosity and/or $T_g$. The disclosed invention, due to the specially designed composition, exhibits all these qualities.

As a consequence of the specially designed molecule length, branching and backbone composition the present invention can be used to formulate various bio-based OCF foam products and foam adhesives that can dramatically increase the sustainability of the construction chemistry solutions. In the case of the OCF foam or foam adhesive according to the invention, it has 20% biocarbon content in one 1000 mL can, which is the most often used volume of container for OCF off-shelf product. Therefore, the reduction of $CO_2$ emission based solely on the contained bio-based carbon is about 0.4 kg of $CO_2$ per 1 can of an OCF product. For example, upgrading from "certified" LEED (Leadership in Energy and Environmental Design) certification level to "silver" certification requires reducing $CO_2$ emission of a building by ca. 6 kg/m². An average window mounted with the use of an OCF foam occupies ca 0.1 m² (90 cm width x 10 cm depth) of floor surface. Given that one 1000 L can yield 65 L of foam allowing mounting of 4 windows, this translates to a reduction of 1 kg of $CO_2$ emission for every 1 m² area occupied by windows. Consequently, the disclosed invention allows, together with additional sustainable construction products, lowering the building emissions and reaching desired certification level. Therefore, the use of this invention is a crucial component of the green transformation of construction business segment. It allows for a significant reduction of greenhouse gasses emission parameters of the constructed building. Development of one component insulating foams based on bio-based polyesters (polyols) with min. 20% of bio-based carbon content according to ASTM D6866-18 allows reaching an objective of carbon footprint reduction by 50% in the whole value chain (equivalent to carbon dioxide realized during curing).

Example 1 Polyester polyol

In the polyester production process, the appropriate amounts (Table 1) of carboxylic acids, or their corresponding acid anhydrides, polyalcohols and an esterification catalyst are combined in a nitrogen purged reactor while being stirred. Carboxylic acids or their corresponding acid anhydrides can be used interchangeably because after the reaction is complete, they form an exactly identical and indistinguishable polymer chain backbone part with the same effect on polyester polyol properties. The mixture is heated to 180-240°C. During heating, water is liberated and is removed via a rectification column and a condenser. The progress of the reaction is monitored by measuring the acid value (AV) of the product. Once the AV is below 1 mg KOH/g and the hydroxyl value (OHV) is within the desired specification, a modifier can be added. If the modifier a is natural oil, it may be added at the beginning of the reaction together with the acids and alcohols. When the modifier is dissolved, and the AV and OHV are appropriate, the product is cooled to a temperature below 100°C and discharged. The raw material amounts are selected in a way that the final polyester polyol has hydroxyl value between 56 and 360 mg KOH/g, but more preferably between 80 and 240 mg KOH/g. Moreover, polyfunctional acids and alcohols are used to provide the polyester polyol with functionality between 1.9 and 4, but preferably between 2.0 and 3. An ideal polyester has a hydroxyl value between 80-240 mg KOH/g and functionality between 2.08 and 3.00 with viscosity not higher than 5 000 mPa*s at 25°C. Functionality of polyols synthesised is calculated according to the following equation (I):

$$f = \frac{N_{OH} - N_{COOH}}{N_{raws} - N_{COOH}} \qquad (I)$$

where: $N_{OH}$ is the starting number of moles of OH groups, $N_{COOH}$ is the starting number of moles of carboxylic groups, $N_{raws}$ is the starting number of molecules of all raw materials.

Such product is ready to be used in OCF foam formulations. Table 1 lists the examples of recipes used to prepare different versions of polyester polyols of the disclosed invention. Table 2 lists the properties of polyester polyols obtained according to recipes from Table 1.

Table 1: Examples of recipes used for synthesizing bio polyester polyols for OCF foam

| Raw category | Raw name | Example 1 S22 (wt. %) | Example 2 S28 (wt. %) | Example 3 S139 (wt. %) | Example 4 S137 (wt. %) |
|---|---|---|---|---|---|
| Alcohols | Diethylene glycol | 10.23 | 14.69 | - | - |
| | Bio-1,4-butanediol | 17.38 | 24.88 | - | - |
| | Bio-1,3-propanediol | - | - | - | 18.9 |
| | Bio-1,2-propanediol | - | - | 9.5 | 12.6 |
| | Bio-Glycerol | 7.54 | - | 4.9 | 7.3 |
| Carboxylic acids | Bio-azelaic acid | 55.45 | 62.35 | - | - |
| | Bio-succinic acid | - | - | - | 44.9 |
| | Bio-dimer fatty acid | - | - | 59.2 | - |
| Catalysts | Tetrabutyl titanate | 0.02 | 0.01 | 0.01 | 0.01 |
| Modifiers | Bio-Castor oil | 20 | 10.0 | 30 | 30 |
| Mass balances | condensate | 10.61 | 11.92 | 3.7 | 13.7 |
| | total charge | 110.61 | 111.92 | 103.7 | 113.7 |
| | product | 100 | 100 | 100 | 100 |
| Calculated average molecular mass [g/mol] | | 1000 | 1000 | 918 | 688 |

As a bio-based dimer fatty acid one may use Radiacid 0970 produced by Oleon. These raw materials are charged into a reactor and a synthesis is carried out according to polyester synthesis good practices. The resulting polyesters are viscous liquids. The key product parameters from the respective examples are in Table 2.

Table 2. Key polyol parameters for reference polyether (references A1 and A2) and bio-polyester polyols used for recipes presented in examples.

| | Bio-carbon content (ASTM D6866-18) [%] | Acid value [mgKOH/g] | Hydroxyl value [mgKOH/g] | Water content [%] | Viscosity [mPa*s @ 25°C] | Calculated functionality | Average molecular mass [g/mol] |
|---|---|---|---|---|---|---|---|
| Reference example A1 (polyether, Rokopol G1000) | 0 | <1 | 165 | <0.05 | 300 | 3.00 | 1000 |
| Reference example A2 (polyether, Rokopol D1002) | 0 | <1 | 110 | <0.05 | 80 | 2.00 | 1000 |
| Example 1 (S22) (polyester) | 92.6 | 0.81 | 173 | <0.05 | 2230 @ 25°C | 3.00 | 973 |
| Example 2 (S28) (polyester) | 89.4 | 0.81 | 111 | <0.05 | 1500 @ 25°C | 2.08 | 1051 |
| Example 3 S139 | 100 | 0.7 | 165 | <0.05 | 4050 | 2.70 | 918 |
| Example 4 S137 | 100 | 0.77 | 220 | <0.05 | 4450 | 2.70 | 688 |

In the above examples (table 2) were used commercially available products, i.e.polyether polyols as examples, with average molecular mass of 1000 g/mol, i.e.: Rokopol G1000 being a glycerine-based polyether polyol (polyoxyalkylene triol), which exists in the form of a homogeneous, clear liquid, and Rokopol D1002, which is a diol (propoxylated propylene glycol). It exists in the form of a homogeneous, clear liquid. Nonetheless, suitable polyether polyols may have average molecular mass from 400 g/mol to 1000 g/mol.

**Example 2 OCF**

The polyester polyols were used in OCF formulations gathered in Table 3, where the bio-based carbon content of the fully cured OCF foam product is>20 % except in the case of the petrochemical reference foam. Bio-carbon content has been measured according to ASTM D6866-18.

Table 3. Example of bio-based OCF formulation and reference formulation, e.g. in a standard 1000 ml can, wherein the sum of weight of ingredients in the can is about 760 g.

| Ingredients of foam in a full can [wt %] | Reference Formulation | Formulation 1 | Formulation 2 | Formulation 3 | Formulation 4 | Formulation 5 |
|---|---|---|---|---|---|---|
| A1 Rokopol G1000 | 16.4 | 2.5 | 4.1 | 2.7 | 0.7 | 1.8 |
| A2 Rokopol D1002 | 8.5 | 3 | | | 3.7 | |
| Example 1 (S22) | | 15.2 | 1.8 | 16.7 | | 0.6 |
| Example 2 (S28) | | 3.5 | 3.7 | 5.1 | 4.2 | 4.1 |
| Example 3 (S139) | | | 4.4 | | 12.9 | 12.3 |
| Example 4 (S137) | | | 11.2 | | 3.7 | 5.3 |

(continued)

| Ingredients of foam in a full can [wt %] | Reference Formulation | Formulation 1 | Formulation 2 | Formulation 3 | Formulation 4 | Formulation 5 |
|---|---|---|---|---|---|---|
| Plasticiser | 1.7 | 1.8 | | 1.4 | | |
| Surfactant | 1.7 | 1.8 | 1.8 | 1.5 | 1.8 | 1.8 |
| Flame retardant | 5 | 7.1 | 9.2 | 6.2 | 9.2 | 8.8 |
| Catalyst | 0.3 | 0.4 | 0.7 | 0.4 | 0.4 | 0.4 |
| Propellant gas | 21 | 20 | 16 | 20 | 20 | 20 |
| Isocyanate PMDI | 45.4 | 44.7 | 47.1 | 46 | 43.4 | 44.9 |
| Bio-carbon content (ASTM D6866-18) [%] | 0 | 20.20 | 23.38 | 23.39 | 24.24 | 26.81 |
| Total polyols/pMDI (weight ratio) | | 0.54 | 0.54 | 0.53 | 0.58 | 0.54 |
| pMDI/total polyols (weight ratio) | | 1.85 | 1.87 | 1.88 | 1.72 | 1.86 |
| polyester /polyether (weight ratio) | 0 | 3.4 | 5.15 | 8.07 | 4.73 | 12.39 |
| pMDI/polyesters | - | 2.39 | 2.23 | 2.11 | 2.09 | 2.01 |

The weight ratio of the total polyol content (i.e. sum of polyester and polyether polyols) to the isocyanate component ranges from 1:1 to 1:3, wherein the exact most preferable ratios are given in Table 3. It is easy to derive the sum of weight of polyols for a person skilled in art on the basis of table 4, i.e. the sum of polyols weight is divided by weight of the cyanate component (e.g. pMDI). The isocyanate component to the polyester mixture ratio is from 1.50:1 to 3:1, by weight, preferably from 1.8:1 to 2.8:1, but the most preferable ratio is given in Table 3. The total polyol content may be defined in the mixture as well as weight ratio of the isocyanate content to the total polyol content (i.e. the sum of polyester and polyether polyols) and in this case it is from 1:1 do 3:1, with an optimum around 1:1.7 to 1:1.9. This ratio allows development of isocyanate prepolymer in the OCF can that exhibits desired branching, reactivity and viscosity. Experience shows that prepolymers formed outside of this ratio do not form satisfactory OCF foam products. Exact values of these ratios are given in table 4. The largest part of polyol mix are bio-based raw materials produced by Selena. The isocyanate component is polymeric methylene diphenyl diisocyanate (pMDI), e.g. produced by BASF, Covestro or Borsodchem. Additionally, trimerized pentamethylene diisocyanate may be used as the isocyanate component. In addition to them, each polyol blend contains a plasticizer, e.g chloroparaffin or tris-chloropropyl phosphate (TCPP), a surfactant, e.g silicone-based surfactants from Niax and Tegostab families, a flame retardant, such as: TCPP, triethyl phosphate (TEP), and a catalyst, e.g. 2,2'-dimorpholinodiethylether (DMDEE) or pentamethyldiethyltriamine (PMDETA).

The cans with the product were always prepared according to the same procedure. The polyols, surfactant, plasticiser and catalyst amounts were carefully measured and mixed using an overhead stirrer. This premix has been dosed into 1000 mL OCF cans in appropriate weights and pMDI has been dosed immediately after, followed by capping of the can. Afterwards, the cans have been placed in a pressurising apparatus where appropriate amounts of gases have been injected. Such pressurised cans have been manually shaken for about 60 s each to ensure proper mixing of the foam components. After 2 days of aging, the foams have been sprayed into standard test moulds under standard conditions of 50% relative humidity and temperature of 23°C. After hardening, the evaluation of cured foams has been performed. Table 4 depicts the comparison of the properties of OCF formulations based on petrochemical and bio-origin raw materials.

Table 4. Comparison of properties of bio-based and fossil-based OCF foam formulations.

| | PETRO-BASED OCF | BIO-BASED OCF | | | | |
|---|---|---|---|---|---|---|
| | Reference Formulation | Formulation 1 | Formulation 2 | Formulation 3 | Formulation 4 | Formulation 5 |
| CONDITIONS during the tests | Environment temperature 24°C/ humidity 49% RH | | | | | |
| YIELD FRESH FOAM according to internal method RB/024/instr.4[in the gap 6x6x100cm] [l] | 10.08 | 12.4 | 13.34 | 13.2 | 12.2 | 13.6 |
| POST EXPANSION according to internal method RB/024/instr.11 [in the gap 6x6x100cm] [%] [dry/wet] | 104.46 / 115.88 | 89.54/ 95.82 | 82.37 / 91.51 | 80.24/ 95.23 | 79.90/ 92.32 | 81.39/ 89.45 |
| FULL FREE FOAMING DENSITY according to RB/024/instr.2 [kg/m3] | 12.15 | 10.26 | 14.12 | 8.76 | 9.23 | 8.89 |
| DIMENSIONAL STABILITY according to internal method RB/024/instr.9&10 [%] after 24h/3x24h/7x24h/14x24h  1. between surface, which is absorbing water, wet  2. between surface which is non absorbing water, wet | 1. 1.18/-0.4/ -1.36/-0.48  2. 0.04/ -0.03/ 0.10/0.13 | 1. 0.98/ -0.40/-0.78/-0.48  2. 0.21/ 0.07/ 0.2/ 0.42 | 1. -2.26/-1.85/ -2.37/ -2.38  2. -1.23/ -1.70/1.53/ -2.47 | 1. 1.18/ -0.40/-1.36/-0.48  2. 0.04/-0.03/ 0.10/0.13 | 1. 0.41/ -0.65/-0.98/-0.36  2. 0.17/-0.23/ 0.14/0.07 | 1. 0.25/ -0.90/-1.04/-0.12  2. 0.34/0.10/ 0.25/0.42 |
| TACK FREE TIME according to internal method RB/024/instr.14 [wet bead] [min:sec] | 3:50 | 4:10 | 2:50 | 4:22 | 4:13 | 4:01 |
| CUTTING TIME according to internal method RB/024/instr.14 [wet bead] [min:sec] | 12:00 | 13:02 | 11:20 | 13:33 | 14:00 | 14:15 |
| THE TENSILE STRENGTH OF A PRODUCT PERPENDICULAR TO ITS FACES according to PN-EN 1607:2013 [kPa] | 91 | 88 | 136 | 81 | 86 | 83 |
| THERMAL CONDUCTIVITY according to PN-EN 12667:2002 [mW/m·K] | 35.37 | 39.56 | 38.02 | 41.42 | 39.56 | 38.06 |
| FLAMMABILITY according to DIN 4102 [cm] | 20 | 20 | 20 | 20 | 20 | 20 |

| | PETRO-BASED OCF | BIO-BASED OCF | | | | | |
|---|---|---|---|---|---|---|---|
| | Reference Formulation | Formulation 1 | Formulation 2 | Formulation 3 | Formulation 4 | Formulation 5 |
| BIO-BASED CARBON CONTENT in polyols blend according to ASTM D6866 - 18 [%] | 0 | 57.82 | 64.89 | 58.70 | 67.49 | 74.41 | |
| BIO-BASED CARBON CONTENT IN OCF PRODUCT according to ASTM D6866 - 18 [%] | 0 | 20.20 | 20.38 | 23.39 | 24.24 | 26.81 | |

EP 4 186 936 A1

The above results (Table 4) show that OCF formulations on bio-based polyols present similar parameters as the reference foam of 100% petrochemical origin. Each formulation presented in table comprises at least 20% of biocarbon, wherein the preferable content may range from 20% to 35% by weight. Additionally, the more preferable content of biocarbon is from 20% to 30%, but most preferably from 20.20% to 26.81% by weight. The main advantages of bio-based OCF are: higher efficiency and lower post expansion, which is especially important for foam and foam adhesive application and processing. In terms of dimensional stability, all foams are within the allowable percentage of deviation, which is up to +/- 5%. The foam processing times are also very similar. When comparing the perpendicular tearing strengths, all foams present similar values. Due to higher strength and density formulation 2 (Table 4) is particularly suited for sustainable or bio-based foam adhesive (FOAD) applications where such parameters are desired. As indicated in the literature, polyesters have a positive effect on the mechanical properties, improving the strength of the material. With regard to flammability, the test results confirm that tested formulations qualify as flammable materials, and according to the German standard DIN 4102 they are classified as class B3. No differences in the behaviour of the foams were observed when exposed to a flame. Finally, it is worth emphasizing that it is possible to achieve bio-based foams that contain over 20% of biocarbon and exhibit very similar properties as petrochemical market standard. This is an excellent result, especially given that polyurethane foams are one of the most popular insulating materials used on a large scale.

Additionally, the usage of bio-based/renewable feedstock isocyanates in bio-based OCF product is also claimed. The content of renewable carbon in the OCF can be further significantly increased above >40 % by using such raw materials. The input to producing "green" isocyanate is starch from field corn, feed and other industrial crops, which is not intended for human consumption and does not directly compete with food production. In terms of chemicals this isocyanate can be based on pentamethylene diisocyanate (PDI) or trimerized pentamethylene diisocyanate. Moreover, if polymeric MDI from renewable feedstocks is used, one can also afford > 40% renewable carbon OCF product using this invention and a mass balance approach. Such renewable pMDI is claimed to be a drop-in product identical to the currently used in the industry and is inherently compatible with the presented invention.

Lastly, sustainable and bio-based LPG and dimethyl ether (DME) propellant gases usage in bio-based OCF products is also claimed. Utilisation of these gases can increase the percentage of biocarbon in OCF product even further above 50%, while Bio-DME can be produced from syngas obtained from biomass as a result of biomass gasification, as well as by catalytic dehydration of methanol. Bio-LPG is chemically identical to Liquefied Petroleum Gas, but with a lower carbon footprint. The primary raw material to produce bio-LPG is the conversion of organic material derived from industrial waste and oils, unsuitable for use in the human and animal food chains. Currently, about 60% of the produced bio-LPG comes from waste processing and various types of sludge, and 40% is obtained from vegetable oils, such as soybean, rapeseed, guinea oil, corn and sugar cane.

## Claims

1. A bio-based polyester polyol for use in one component foam or foam adhesive obtainable by reacting:

    A) at least two polyhydroxyl alcohols, wherein at least one is a bio-based polyhydroxyl alcohol, wherein each polyhydroxyl alcohol comprises at least two hydroxyl groups,
    B) at least one dicarboxylic acid or carboxylic acid anhydrides, preferably a bio-based or sustainably produced dicarboxylic acid,
    C) at least one modifier,

    in the presence of a catalyst,

    wherein the obtained bio-based polyester polyol has hydroxyl value from 80 mg KOH/g to 240 mg KOH/g, functionality from 2.00 to 3.00, preferably it has functionality from 2.08 to 3, and viscosity no greater than 5000 mPa*S@25°C,
    and biocarbon content measured according to ASTM D6866-18 is no less than 89%, wherein preferably the hydroxyl value is from 100 mg KOH/g to 240 mg KOH/g, more preferably from 110 mg KOH/g to 220 mg KOH/g.

2. The bio-based polyester polyol according to claim 1, **characterised in that** the polyester polyol is obtained in a two-step process, where in a first step component A is reacted with component B, preferably components A and B are reacted in the presence of the catalyst until acidic value is below 1 mg KOH/g, and in the second step at least one modifier, preferably the modifier is added to the reaction mixture when acidic value is below 1 mg KOH/g.

3. The bio-based polyester polyol according to claim 1, **characterised in that** polyhydroxyl alcohols are selected from a group comprising: ethylene glycol, diethylene glycol, triethylene glycol, polyethylene glycol of average molecular weight of 200-1000 g/mol, propylene glycol, dipropylene glycol, tripropylene glycol, polyethylene glycol of average molecular weight 200-1000 g/mol, any diol, constitutional isomer of: 1,3-propanediol, 1,4-butanediol, 1,5-pentanediol, 1,6-hexanediol, glycerol, trimethylolpropane, pentaerythritol, isosorbide, preferably polyhydroxyl alcohols are selected from a group comprising: 1,4-butanediol, 1,3-butanediol, 1,2-propanediol, 1,3-propanediol and/or glycerol, wherein preferably polyhydroxyl alcohols are sustainably produced or are bio-based polyhydroxyl alcohols.

4. The bio-based polyester polyol according to claim 1, **characterised in that** the dicarboxylic acid is selected from a group comprising: succinic acid, glutaric acid, adipic acid, pimelic acid, suberic acid, azelaic acid, sebacic acid, dodecanedioic acid, citric acid, phthalic acid, trimesic acid or and dimers of fatty acids with number of carbons from 24-42, preferably dicarboxylic acid is selected from a group comprising: azelaic acid, succinic acid and/or dimer fatty acid, wherein preferably dicarboxylic acid is a bio-based or a sustainably produced dicarboxylic acid.

5. The bio-based polyester polyol according to claim 1, **characterised in that** the modifier is an oil of plant origin or its epoxy derivative is selected from group comprising:
polyethylene terephthalate, polybutylene terephthalate, castor oil, soybean oil, cardoon oil, safflower oil, linseed oil, coconut oil, cochin oil, corn oil, cottonseed oil, olive oil, palm oil, functionalized palm kernel oil, peanut oil, sunflower oil, tall oils, tallow, lesquerella oil, tung oil, whale oil, tea seed oil, sesame seed oil, rapeseed oil, fish oils, any epoxidized derivatives of such oils and any combinations thereof, preferably the modifier is castor oil or soybean oil, wherein more preferably it is castor oil.

6. The bio-based polyester polyol according to claim 1, **characterised in that** the catalyst is selected from a group comprising: tetrabutyl titanate, tetraisopropyl titanate, titanium lactate, zinc chloride, tin (II) chloride, preferably catalyst is tetrabutyl titanate.

7. A bio-based one component polyurethane foam or adhesive foam composition comprising a polyol component, an isocyanate component, plasticiser, surfactant, flame retardant, catalyst, propellant gas, **characterised in that**:

the polyol component comprises a mixture of polyester polyol and at least one polyether polyol, wherein the polyester polyol is a mixture of at least two polyester polyols wherein each polyester polyol is obtained as defined according to claim 1, wherein the ratio of the isocyanate component to the polyol component is from 1:1 to 1:3 by weight, preferably 1:1.7 to 1:1.9,
and biocarbon content measured according to ASTM D6866-18 is at least 20% by weight,
wherein preferably biocarbon content measured according to ASTM D6866-18 is from 20% to 35%, preferably from 20% to 30%, but most preferably from 20.20% to 26.81% by weight,

8. The bio-based one component polyurethane foam according to claim 7, **characterised in that** the plasticiser is selected from a group comprising: chloroparaffin or tris-chloropropyl phosphate.

9. The bio-based one component polyurethane foam according to claim 7, **characterised in that** the surfactant is a silicone-based surfactant.

10. The bio-based one component polyurethane foam according to claim 7, **characterised in that** the flame retardant is selected from a group comprising: tris-chloropropyl phosphate or triethyl phosphate.

11. The bio-based one component polyurethane foam according to claim 7, **characterised in that** the catalyst is selected from a group comprising 2,2'-dimorpholinodiethylether or pentamethyldiethyltriamine, preferably the catalyst is 2,2'-dimorpholinodiethylether.

12. The bio-based one component polyurethane foam according to claim 7, **characterised in that** propellant gas is selected from group comprising: LPG or dimethyl ether, preferably propellant gas is a bio-based propellant gas.

13. The bio-based based one component polyurethane foam according to claim 7, **characterised in that** the isocyanate component is selected from a group comprising:
polymeric methylene diphenyl diisocyanate or trimerized pentamethylene diisocyanate, preferably the isocyanate component is polymeric methylene diphenyl diisocyanate.

14. The bio-based based one component polyurethane foam according to claim 7, **characterised in that** the polyester polyol mixture comprises two polyester polyols in in ratio from 15.2:3.5 to 16.7:5.1 by weight, or three polyester polyols in ratio 4.2:12.9:3.7 by weight, or four polyester polyols in ratio from 0.6:4.1:12.3:5.3 to 1.8:3.7:4.4:11.2 by weight.

15. The bio-based based one component polyurethane foam according to claim 7, **characterised in that** the polyether polyol is selected from a group comprising:
polypropylene glycol triol with an average molecular weight of 400-1000 g/mol or polypropylene glycol diol with an average molecular weight of 400-1000 g/mol or their mixture.

16. The bio-based based one component polyurethane foam according to claim 7, 13 or 14, **characterised in that** the polyester component to the isocyanate component ratio is from 0.53 to 0.58 by weight.

17. The bio-based based one component polyurethane foam according to claim 7, **characterised in that** the isocyanate component to polyester component ratio is from 1.5:1 to 3:1, by weight, preferably from 1.8:1 to 2.8:1, most preferably from 2.01:1 to 2.38:1.

18. The bio-based polyester polyol according to claim 1, **characterised in that** the multicarboxyl carboxylic acid anhydrides are selected from the group consisting of, but not limited to: phthalic anhydride, pyromellitic anhydride, maleic anhydride, succinic acid anhydride, glutaric acid anhydride, adipic acid anhydride, pimelic acid anhydride, suberic acid anhydride, azelaic acid anhydride, sebacic acid anhydride, dodecanedioic acid anhydride.

19. A use of bio-based polyester polyol for producing one component construction foam or foam adhesive.

Europäisches
Patentamt

European
Patent Office

Office européen
des brevets

## EUROPEAN SEARCH REPORT

Application Number

**EP 21 46 1625**

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 309 345 B2 (STEPAN CO [US]) 12 April 2016 (2016-04-12) * column 16, lines 49-51 * * table 4 * * column 35, line 3 * ----- | 1-19 | INV. C08G18/40 C08G18/42 C08G18/48 C08G18/76 C08G63/48 |

TECHNICAL FIELDS
SEARCHED      (IPC)

C08G
C09J

The present search report has been drawn up for all claims

| Place of search | Date of completion of the search | Examiner |
|---|---|---|
| Munich | 11 May 2022 | Bergmeier, Martin |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
.......................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 46 1625

This annex lists the patent family members relating to the patent documents cited in the above-mentioned European search report.
The members are as contained in the European Patent Office EDP file on
The European Patent Office is in no way liable for these particulars which are merely given for the purpose of information.

11-05-2022

| Patent document cited in search report | | Publication date | Patent family member(s) | | Publication date |
|---|---|---|---|---|---|
| US 9309345 | B2 | 12-04-2016 | CA | 2701044 A1 | 09-04-2009 |
| | | | EP | 2195384 A1 | 16-06-2010 |
| | | | PL | 2195384 T3 | 29-06-2020 |
| | | | US | 2010240785 A1 | 23-09-2010 |
| | | | US | 2013090399 A1 | 11-04-2013 |
| | | | WO | 2009045926 A1 | 09-04-2009 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1883690 B1
- US 2005239915 A1
- CN 107522832B
- WO 2018005538 A2
- EP 3052559 A1
- EP 2226311 A1
- US 2013090449 A1
- EP 3475358 A2
- EP 2912081 B1

**Non-patent literature cited in the description**

- Fully Bio-Based Thermosetting Polyurethanes from Bio-Based Polyols and Isocyanates. *Polymers,* 2021, vol. 13, 1255
- **YAZICI ; ÇELEBI.** Synthesis and Characterization of Bio-Based Polyester Polyol. JOTCSA, 2016, vol. 3, 721-730